Europäisches Patentamt

(19) European Patent Office

Office européen des brevets

(11) Publication number: **0 266 969**
**A1**

(12) # EUROPEAN PATENT APPLICATION

(21) Application number: **87309558.2**

(22) Date of filing: **29.10.87**

(51) Int. Cl.⁴: **F16B 35/00**

(30) Priority: **03.11.86 US 926939**

(43) Date of publication of application:
**11.05.88 Bulletin 88/19**

(84) Designated Contracting States:
**DE FR GB**

(71) Applicant: **Hewlett-Packard Company**
**P.O. Box 10301 3000 Hanover Street**
**Palo Alto California 94303-0890(US)**

(72) Inventor: **Krebs, Kenneth R.**
**.8051 Horizon Drive Colorado Springs**
**Colorado 80918(US)**

(74) Representative: **Colgan, Stephen James et al**
**CARPMAELS & RANSFORD 43 Bloomsbury**
**Square**
**London WC1A 2RA.(GB)**

(54) **Press-in locking post.**

(57) The present invention is a press-in locking post (5) for fastening components, such as an RS232 cable connector (60), onto metal or plastic panels (50). The locking post has a male portion (10) and a female portion (20) and a clinching-profile knurl (15) at the male-female junction. The clinching knurl serves to prevent rotation of the post once it is inserted into a panel (50). This anti-rotation feature is important if components are to be secured with a nut (10) onto the male portion once the post is inserted into a panel. The knurl eliminates the need for a separate anti-rotation device which would otherwise accompany the post. The knurl also allows for ease of insertion of the post into a panel by simply pressing it in and ease of removal of the post from a panel by simply pushing it out. The knurl also adds structural strength to the post at the male-female junction. The press-in locking post may also be referred to as a press-in jack screw or a press-in male/female swage stand off.

FIG 1

## PRESS-IN LOCKING POST

### BACKGROUND

A locking-post is a fastener used to securely join components, such as in mounting a standard RS232C cable connector onto the back panel of a computer terminal. Such a locking-post may also be referred to as a jackscrew or a male-female swage stand-off. Such a locking-post has a male portion and a female portion. The male portion is fixed at the base of the female portion such that when the male portion is completely inserted into a surface the female portion protrudes flush to the surface in position to receive another male screw. A typical surface into which the male portion is pressed is the metal or plastic panel on the backside of an electronic device, such as a computer terminal. The male portion can secure any D-subminiature connector, such as as RS232 cable connector, onto the panel and the female portion protrudes such that another cable connector can be mated and secured onto the first connector. The male portion may also protrude on the opposite side of the panel so that it may receive a nut. Typical dimensions of such a locking-post are as follows: The length of the male portion may range from approximately 5mm to approximately 17mm, bearing 4-40 thread throughout its length and having a cross-sectional diameter of approximately 3mm, including the threads. For such a male portion, the female portion would be approximately 5mm long and be several 4-40 threads deep and have a cross-sectional diameter of approximately 5mm.

A common problem with locking-posts is rotation of the locking-post once it is inserted into a panel. Such rotation is particularly a problem if a nut must be secured onto the male portion on the opposite side of the panel. Rotation is prevented with a separate locking device, such as a metallic lock washer or a non-metallic locking patch. Unfortunately, such anti-rotation devices increase the number of parts which must be manipulated during the insertion of locking-posts. Moreover, in assembly-work such parts can be difficult to handle since they are typically so small and the locking device must circumscribe the male portion of the locking-post prior to its insertion in the panel.

### SUMMARY OF THE INVENTION

The present invention is a metal press-in locking-post having a serrated clinching-profile knurl at the junction of the male and female portion. The invention may also be referred to as a press-in jack screw or a press-in male/female swage stand-off. The dimensions of the preferred embodiment of the present invention are as follows. The female portion is 4mm long having a 4-40 UNC-2B threaded well. The well is three full threads deep. The male portion is 8mm long with 4-40 UNC-2A thread throughout its length. At the junction of the male and female portions is a serrated clinching-profile knurl. The clinching knurl serves to secure the locking-post into a surface, such as a metal or plastic panel. The clinching knurl allows the locking-post to be easily pressed in or pushed out of the panel. This ease of insertion or removal reduces assembly work tedium and increases assembly work efficiency. The clinching knurl also provides resistance to rotation once the locking-post is in place. This anti-rotation feature allows for a nut to be tightened onto the male portion without the necessity of holding the locking-post to prevent rotation as the nut is tightened. Resistance to rotation also decreases the likelihood that the locking-post will loosen once it is inserted in a panel. The anti-rotation feature also eliminates the need for an extra anti-rotation part such as a lock washer or a locking patch. Preventing rotation with a reduced number of parts also reduces assembly work tedium and increases assembly work efficiency. The knurl also strengthens the locking-post by providing a thicker cross-section at what would otherwise be the weakest point: the male-female junction. The invention is particularly well suited for use in metal or plastic panels serving to mount cable connectors securely to one side of the panel and serving as a locking mechanism for mating connectors on the other side of the panel with its male portion. Given that thousands of locking-posts may be used in the assembly of products which incorporate such connector panels, the present invention offers significant advantages by eliminating the need for extra anti-rotation parts, maximizing ease of manipulation in insertion and removal of the locking-post and providing extra strength at the male-female junction thereby increasing the life of the part.

BRIEF DESCRIPTION OF THE DRAWINGS

Figure 1 shows a side view of the present invention, the press-in locking post.

Figure 2 shows a head-on view of the press-in locking post of Figure 1.

Figure 3A shows an application of the present invention, the press-in locking post.

Figure 3B shows a cross-sectional side view of Figure 3A.

DESCRIPTION OF THE PREFERRED EMBODIMENT

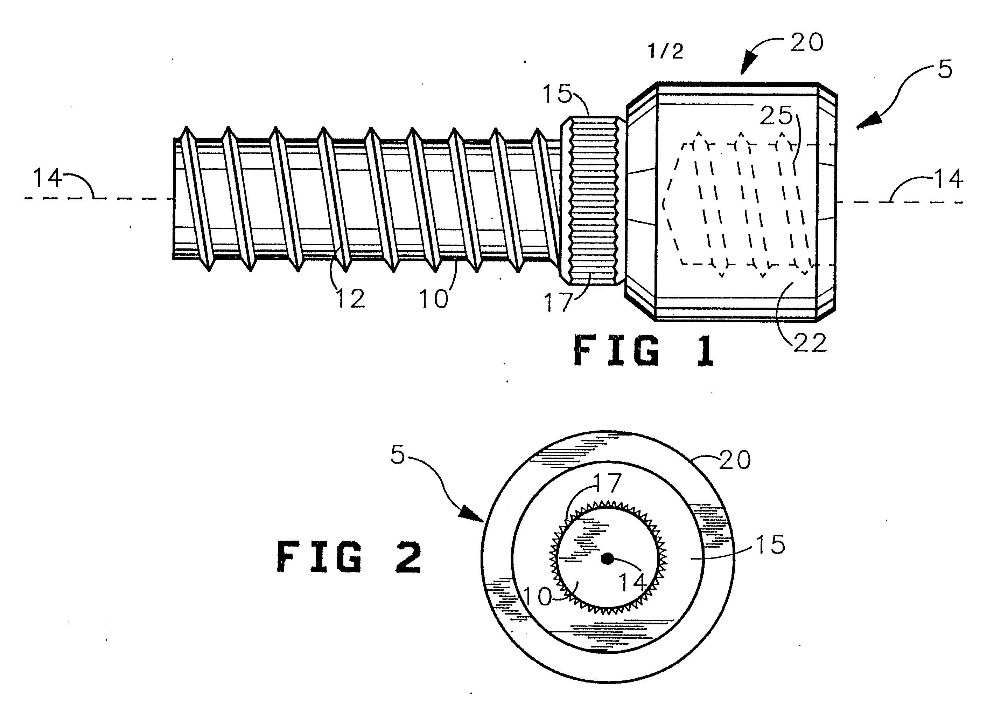

Figure 1 shows a side view of the present invention. Reference numeral 5 indicates a metal press-in locking post as a single unit. The dimensions of the preferred embodiment of the present invention are as follows. Male portion 10 is 8mm long having 4-40 UNC-2A threading 12 throughout its length. Clinching-profile knurl 15 is fixed at the base of male portion 10. Knurl 15 is 2mm long and has serrated clinching grooves 17 about its entire circumference, said grooves running parallel to central axis 14 of locking post 5. Female portion 20 is 4mm long and is fixed to the other end of knurl 15. Female portion 20 has threaded well 22 which has 4-40 UNC-2B threading 25 three full threads deep.

Figure 2 shows a head-on view of press-in locking post 5 of Figure 1, looking directly into male portion 10.

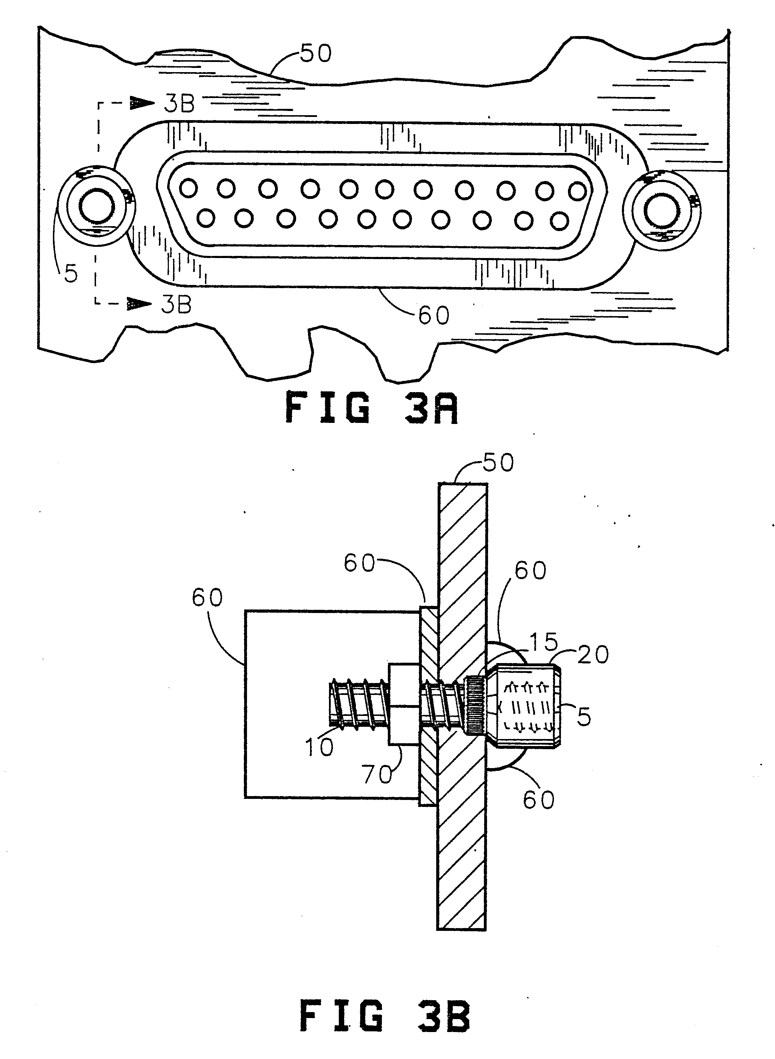

Figure 3A shows an application of the present invention, press-in locking post 5. D-subminiature cable connector 60 is fastened into panel 50 with press-in locking post 5.

Figure 3B shows a cross-sectional side view of Figure 3A. As can be seen from the side view of Figure 3B, clinching knurl 15 serves to secure press-in locking post 5 in panel 50 and resist rotation of post 5 once it is in place in panel 50. Male portion 10 protrudes on one side of panel 50 in position to receive nut 70. Female portion 20 protrudes on the other side of panel 50 in position to receive a compatible male portion of another post so that another connector may be mated and secured onto connector 60.

Claims

1. a press-in locking post (5) for fastening parts (60, 70) onto one or both sides of a panel (50), said post comprising:

a male portion (10) having male threading (12) along its length;

a clinching knurl portion (15) fixed at the base of said male portion, said knurl having clinching grooves (17) about its entire circumference, said grooves running parallel to the central longitudinal axis (14) of said male portion; and

a female portion (20) fixed to the other end of said knurl, said female portion having a thread well (22) for receiving another male portion compatible with said female portion.

**FIG 1**

**FIG 2**

0 266 969

50

3B

5

3B

60

# FIG 3A

50

60

60

60

15

20

5

10

70

60

# FIG 3B

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | US-A-3 498 353 (BARRY)<br>* claims; figure 1 *<br>--- | 1 | F 16 B 39/00 |
| Y | DE-U-7 725 441 (KUTTER)<br>* figures 1, 2 *<br>--- | 1 | |
| A | US-A-2 577 810 (ROSAN)<br>* figure 1 *<br>--- | 1 | |
| A | US-A-2 882 948 (WALLACE)<br>--- | | |
| A | DE-A-3 231 114 (RIEPERTINGER)<br>----- | | |

TECHNICAL FIELDS SEARCHED (Int. Cl.4)

F 16 B 35/00
F 16 B 37/00
F 16 B 39/00

The present search report has been drawn up for all claims

| Place of search | Date of completion of the search | Examiner |
|---|---|---|
| BERLIN | 20-01-1988 | SCHAEFFLER C.A.A. |